(19) Europäisches Patentamt
European Patent Office
Office européen des brevets

(11) **EP 4 548 254 B1**

(12) **EUROPEAN PATENT SPECIFICATION**

(45) Date of publication and mention
of the grant of the patent:
**04.03.2026 Bulletin 2026/10**

(51) International Patent Classification (IPC):
**G06N 3/02** (2006.01)     **G06N 3/08** (2023.01)
**G06T 15/20** (2011.01)

(21) Application number: **23782651.6**

(22) Date of filing: **01.09.2023**

(52) Cooperative Patent Classification (CPC):
**G06T 15/20; G06N 3/0455; G06N 3/0464;
G06N 3/0475; G06N 3/084; G06N 3/088;
G06N 3/09; G06N 20/10; G06T 15/205;** G06N 3/048

(86) International application number:
**PCT/US2023/031881**

(87) International publication number:
**WO 2024/050107 (07.03.2024 Gazette 2024/10)**

(54) **THREE-DIMENSIONAL DIFFUSION MODELS**

DREI-DIMENSIONALE DIFFUSION-MODELLE

MODÈLES DE DIFFUSION TRIDIMENSIONNELLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.09.2022 US 202263403650 P**

(43) Date of publication of application:
**07.05.2025 Bulletin 2025/19**

(73) Proprietor: **Google LLC
Mountain View, CA 94043 (US)**

(72) Inventors:
• **WATSON, Daniel Enrique**
**Toronto, Ontario M5H 2G4 (CA)**
• **CHAN, William**
**Toronto, Ontario M5H 2G4 (CA)**
• **TAGLIASACCHI, Andrea**
**Vancouver, British Columbia V6C 0A8 (CA)**
• **NOROUZI, Mohammad**
**Toronto, Ontario M5H 2G4 (CA)**

(74) Representative: **Varley, James Richard
Venner Shipley LLP
200 Aldersgate
London EC1A 4HD (GB)**

(56) References cited:
**WO-A2-2021/158337**

• **ROMBACH ROBIN ET AL: "High-Resolution
Image Synthesis with Latent Diffusion Models",
2022 IEEE/CVF CONFERENCE ON COMPUTER
VISION AND PATTERN RECOGNITION (CVPR),
IEEE, 18 June 2022 (2022-06-18), pages 10674 -
10685, XP034194085, DOI: 10.1109/
CVPR52688.2022.01042**
• **JIMEI YANG ET AL: "Weakly-supervised
Disentangling with Recurrent Transformations
for 3D View Synthesis", ARXIV.ORG, CORNELL
UNIVERSITY LIBRARY, 201 OLIN LIBRARY
CORNELL UNIVERSITY ITHACA, NY 14853, 5
January 2016 (2016-01-05), XP080797763**
• **ALEX YU ET AL: "pixelNeRF: Neural Radiance
Fields from One or Few Images", ARXIV.ORG,
CORNELL UNIVERSITY LIBRARY, 201 OLIN
LIBRARY CORNELL UNIVERSITY ITHACA, NY
14853, 3 December 2020 (2020-12-03),
XP081829164**

## Description

FIELD

The present disclosure relates generally to machine learning. More particularly, the present disclosure relates to systems and methods to perform novel view synthesis of a three-dimensional scene with a machine-learned diffusion model.

BACKGROUND

Diffusion Probabilistic Models (DPMs), also known as simply "diffusion models", have recently emerged as a powerful family of generative models, achieving state-of-the-art performance on audio and image synthesis, while admitting better training stability over adversarial approaches, as well as likelihood computation, which enables further applications such as compression and density estimation. Diffusion models have achieved impressive empirical results in a variety of image-to-image translation tasks not limited to text-to-image, super-resolution, inpainting, colorization, uncropping, and artifact removal.

"High-Resolution Image Synthesis with Latent Diffusion Models" (R. Rombach et al., EEE/CVF Conference on Computer Vision and Pattern Recognition (CVPR), New Orleans, LA, USA, 2022, pp. 10674-10685) discloses applying diffusion models in the latent space of powerful pretrained autoencoders. By introducing cross-attention layers into the model architecture, diffusion models are turned into powerful and flexible generators for general conditioning inputs such as text or bounding boxes and high-resolution synthesis becomes possible in a convolutional manner.

"Weakly-supervised Disentagling with Recurrent Transformations for 3D View Synthesis" (J. Yand et al., arXiv:1601.00706, 2016) discloses a recurrent convolutional encoder-decoder network that is trained end-to-end on the task of rendering rotated objects starting from a single image.

"pixelNeRF: Neural Radiance Field from One or Few Images" (A. Yu et al., arXiv:2012.02190, 2020) discloses a learning framework that predicts a continuous neural scene representation conditioned on one or few input images.

WO 2021/158337 A2 discloses a framework for learning neural scene representations directly from images, without three-dimensional (3D) supervision, by a machine-learning model.

SUMMARY

The invention is defined in the appended claims.

Aspects and advantages of embodiments of the present disclosure will be set forth in part in the following description, or can be learned from the description, or can be learned through practice of the embodiments.

One example aspect of the present disclosure is directed to a computer-implemented method to perform novel view synthesis of a three-dimensional scene with a machine-learned diffusion model. The method can be performed for each of one or more iterations. The method includes obtaining, by a computing system comprising one or more computing devices, an input comprising data descriptive of an input pose. The method includes processing, by the computing system, the input with the machine-learned diffusion model to generate a synthetic image of the three-dimensional scene from the input pose. The machine-learned diffusion model includes a plurality of denoising steps configured to respectively receive a plurality of conditioning images. Processing, by the computing system, the input with the machine-learned diffusion model to generate the synthetic image includes, for each of at least two of the plurality of denoising steps: accessing, by the computing system, an image set that comprises a plurality of images that depict the three-dimensional scene from a plurality of poses; and sampling, by the computing system, a sampled image from the image set to serve as the conditioning image for such denoising step.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

BRIEF DESCRIPTION OF THE DRAWINGS

Detailed discussion of embodiments directed to one of ordinary skill in the art is set forth in the specification, which makes reference to the appended figures, in which:

Figure 1A depicts a graphical diagram of an example process for performing pose-conditional image-to-image training according to example embodiments of the present disclosure.

Figures 1B and 1C depict a graphical diagram of an example process for performing novel view synthesis over a plurality of iterations according to example embodiments of the present disclosure.

Figure 2 depicts a graphical diagram of an example diffusion model architecture for performing novel view synthesis according to example embodiments of the present disclosure.

Figure 3A depicts a block diagram of an example computing system that performs novel view synthesis according to example embodiments of the present disclosure.

Figure 3B depicts a block diagram of an example computing device according to example embodiments of the present disclosure.

Figure 3C depicts a block diagram of an example computing device according to example embodiments of the present disclosure.

Reference numerals that are repeated across plural figures are intended to identify the same features in various implementations.

DETAILED DESCRIPTION

Overview

Generally, the present disclosure is directed to systems and methods that perform novel view synthesis of a three-dimensional (3D) scene with a machine-learned diffusion model. Example implementations of the proposed models may be referred to as "3D Diffusion Models" or 3DiM. The models described herein can be or include an image-to-image diffusion model that takes one or more (e.g., a single) reference views and one or more (e.g., a single) relative poses as input and generates the target view. Thus, the machine-learned diffusion models described herein can perform novel view synthesis from as few as a single image.

More particularly, one particular image-to-image translation problem where the proposed diffusion models can be applied is that of novel view synthesis. In the novel view synthesis task, given a set of image(s) of a given 3D scene, the task is to infer the scene depicted in the set of image(s), but from novel viewpoints.

According to an aspect of the present disclosure, example systems and methods described herein can include and/or leverage image-to-image diffusion models to perform the novel view synthesis task. The image-to-image diffusion models can have been trained on pairs of images of the same scene, where it is assumed that the relative pose between the two images is known. Specifically, the image-to-image diffusion models can be trained to denoise the second image, conditionally on the first (noiseless) image (and optionally multiple conditioning images) and the relative pose between the two.

According to another aspect of the present disclosure, the proposed techniques can overcome 3D inconsistency in imagery synthesized by the model at inference time by sampling frames in a similar fashion to autoregressive models. Specifically, during the "reverse diffusion" process of each individual frame (e.g., which may also be referred to as, "denoising" or inference), the conditioning frame at each denoising step can be sampled (e.g., randomly or "stochastically") from an image set, where the image set contains the set of previously-generated synthetic frame(s) and/or the initial reference frame(s). Therefore, multiple different images sampled from the set of initially-given or previously-generated frames can guide generation of the next synthetic image. For example, the diffusion model can be conditioned on a random frame at each denoising step. This allows for efficient mixing of previously-generated or reference views of the scene, which results in improved 3D consistency between the synthesized image(s) and the image(s) in the image set.

Example experiments demonstrate that the proposed stochastic conditioning sampler yields more 3D consistent results compared to the naive sampling process which only conditions on a single previous frame. For example, certain experiments compare 3DiMs to prior work on the SRN ShapeNet dataset, demonstrating that 3DiM's generated scene videos from a single view achieve much higher fidelity yet remain 3D consistent.

Another aspect of the present disclosure is directed to a new evaluation methodology, which may be referred to as 3D consistency scoring. In 3D consistency scoring, a neural radiance field (NeRF) model can be trained on the outputs of the diffusion model. The performance of the trained NeRF model can then be evaluated to measure (e.g., serve as a proxy for) 3D consistency of the diffusion model. Thus, the 3D consistency scoring can numerically capture 3D consistency by training neural fields on model outputs.

Another example aspect provides improvements (e.g., which can be applied to the UNet architecture) for 3D novel view synthesis. For example, according to one aspect, at least one of the plurality of denoising steps of the machine-learned diffusion model can include at least one block that uses shared weights for processing both a current intermediate image for such denoising step and the conditioning image for such denoising step. Additionally or alternatively, at least one of the plurality of denoising steps of the machine-learned diffusion model can include one or more frame cross-attention blocks, where information mixing between the current intermediate image for such denoising step and the conditioning image for such denoising step is limited to the one or more frame cross-attention blocks (e.g., does not occur in the denoising step except for within the frame cross-attention block(s)). These improvements can assist in providing high-quality results in novel view synthesis.

The present disclosure provides a number of technical effects and benefits. As one example, the proposed 3D diffusion models are geometry free. Therefore, the proposed techniques can provide improved performance in "few-shot" or "single-shot" settings. Thus, the performance of a computing system on a novel view synthesis task can be improved in these settings.

Further, the proposed models do not rely on hyper-networks or test-time optimization for novel view synthesis. The proposed techniques are therefore a simpler end-to-end approach that may require less processor usage and/or memory usage to execute as compared with current state of the art approaches.

As another example, the proposed techniques allow a single model to easily scale to a large number of scenes. Thus, for example as compared to NeRF models, a single trained model can be used to perform view synthesis on multiple different scenes. This "re-use" of the trained model can result in less training needing to be performed (e.g., as compared to training multiple different models). Performing less training results in reduced consumption of computing resources such as memory usage, processor usage, network bandwidth, etc.

Example embodiments of the present disclosure will be discussed in further detail.

Example Pose-Conditional Diffusion Models

Consider the problem of novel view synthesis given few images from a probabilistic perspective. Given a complete description of a 3D scene $\mathcal{S}$, for any pose **p**, the view $\mathbf{x}^{(\mathbf{p})}$ at pose **p** is fully determined from $\mathcal{S}$, i.e., views are conditionally independent given $\mathcal{S}$. However, example implementations are interested in modeling distributions of the form $q(\mathbf{x}_1,..., \mathbf{x}_m | \mathbf{x}_{m+1}, ..., \mathbf{x}_n)$ without $\mathcal{S}$, where views are no longer conditionally independent.

A concrete example is the following: given the back of a person's head, there are multiple plausible views for the front. An image-to-image model sampling front views given only the back should indeed yield different outputs for each front view - with no guarantees that they will be consistent with each other - especially if it learns the data distribution perfectly.

Similarly, given a single view of an object that appears small, there is ambiguity on the pose itself: is it small and close, or simply far away? Thus, given the inherent ambiguity in the few-shot setting, there is need for a sampling scheme where generated views can depend on each other in order to achieve 3D consistency.

This contrasts with NeRF approaches, where query rays are conditionally independent given a 3D representation $\mathcal{S}$ - an even stronger condition than imposing conditional independence among frames. Such approaches try to learn the richest possible representation for a single scene $\mathcal{S}$, while 3DiM avoids the difficulty of learning a generative model for $\mathcal{S}$ altogether.

Example image-to-image diffusion models with pose conditioning

Given a data distribution $q(\mathbf{x}_1, \mathbf{x}_2)$ of pairs of views from a common scene at poses $\mathbf{p}_1, \mathbf{p}_2 \in \text{SE}(3)$, example implementations define an isotropic Gaussian process that adds increasing amounts of noise to data samples as the signal-to-noise-ratio $\lambda$ decreases:

$$q(\mathbf{z}_k^{(\lambda)}|\mathbf{x}_k) := \mathcal{N}(\mathbf{z}_k^{(\lambda)}; \sigma(\lambda)^{\frac{1}{2}}\mathbf{x}_k, \sigma(-\lambda)\mathbf{I}) \quad (1)$$

where $\sigma(\cdot)$ is the sigmoid function. example implementations can apply the reparametrization trick and sample from these marginal distributions via

$$\mathbf{z}_k^{(\lambda)} = \sigma(\lambda)^{\frac{1}{2}}\mathbf{x}_k + \sigma(-\lambda)^{\frac{1}{2}}\varepsilon, \quad \varepsilon \sim \mathcal{N}(\mathbf{0}, \mathbf{I}) \quad (2)$$

Then, given a pair of views, example implementations learn to reverse this process in one of the two frames by minimizing the following objective, which yields much better sample quality than maximizing the true evidence lower bound (ELBO):

$$L = \mathbb{E}_{q(\mathbf{x}_1,\mathbf{x}_2)} \; \mathbb{E}_{\lambda,\varepsilon} \quad \| \; \varepsilon_\theta\left(\mathbf{z}_2^{(\lambda)}, \mathbf{x}_1, \lambda, \mathbf{p}_1, \mathbf{p}_2\right) - \varepsilon \; \|_2^2 \quad (3)$$

where $\varepsilon_\theta$ is a neural network whose task is to denoise the frame $\mathbf{z}_2^{(\lambda)}$ given a different (clean) frame $\mathbf{x}_1$, and $\lambda$ is the log signal-to-noise-ratio. To make the example proposed notation more legible, certain descriptions herein slightly abuse notation and from now on simply write $\varepsilon_\theta(\mathbf{z}_2^{(\lambda)}, \mathbf{x}_1)$.

Example 3D consistency via stochastic conditioning

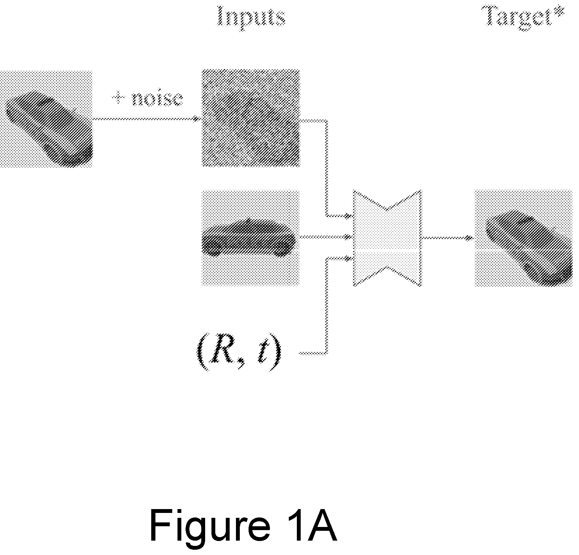

Figure 1A depicts an example of pose-conditional image-to-image training, including example training inputs and outputs for pose-conditional image-to-image diffusion models. Given two frames from a common scene and their poses ($R$, $t$), the task is to undo the noise added to one of the two frames. (*) In practice, an example proposed neural network is trained to predict the Gaussian noise $\varepsilon$ used to corrupt the original view - the predicted view is still just a linear combination of the noisy input and the predicted $\varepsilon$.

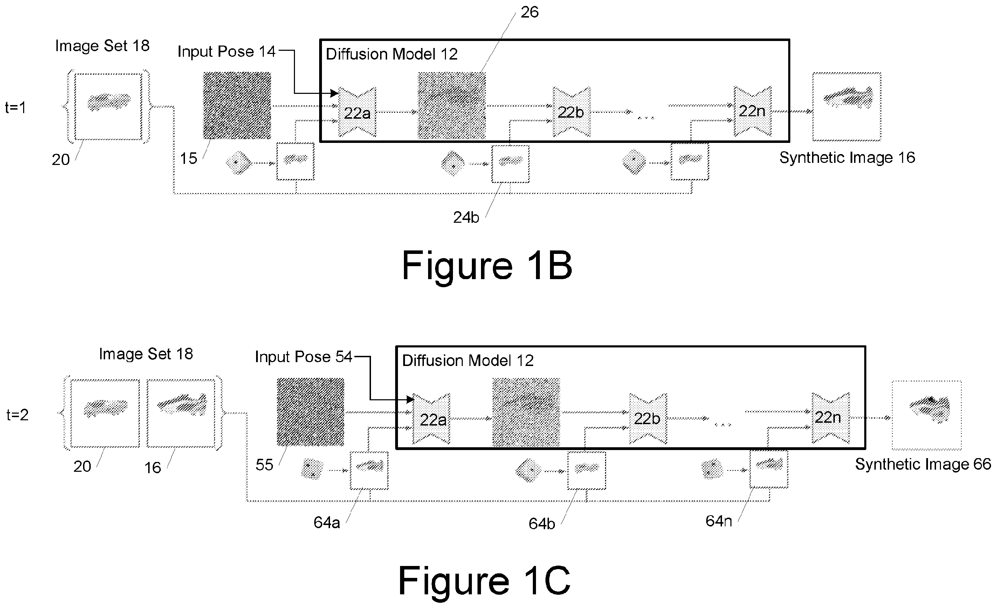

Figures 1B and 1C depict an example stochastic conditioning sampler - There are two main components to the illustrated example sampling procedure: 1) the autoregressive generation of multiple frames, and 2) the denoising process to generate each frame. When generating a new frame, example implementations randomly select a previous frame as the conditioning frame at each denoising step. Some example implementations omit the pose inputs in the diagram to avoid overloading the figure, but they should be understood to be recomputed at each step, depending on the conditioning view that is sampled.

In the ideal situation, example implementations would model an example proposed 3D scene frames using the chain rule decomposition:

$$p(\mathbf{x}) = \prod_i p(\mathbf{x}_i | \mathbf{x}_{<i}) \quad (4)$$

This factorization is ideal, as it models the distribution exactly without making any conditional independence assumptions. Each frame is generated autoregressively, conditioned on all the previous frames. However, this solution was found to perform poorly.

Due to memory limitations, some example implementations can only condition on a limited number of frames in practice, (e.g., a $k$-Markovian model). It was also found that, as example implementations increase the maximum number of input frames $k$, the worse the sample quality becomes.

Therefore, in order to achieve the best possible sample quality, some example implementations employ the bare minimum of $k = 2$ (i.e., an image-to-image model). With $k = 2$, example implementations can still achieve approximate 3D consistency. Instead of using a sampler that is Markovian over frames, some example implementations leverage the iterative nature of diffusion sampling by varying the conditioning frame at each denoising step.

**Stochastic Conditioning.** This section now details an example proposed novel stochastic conditioning sampling procedure that allows example implementations to generate 3D-consistent samples from a 3DiM. Some example implementations start with a set of conditioning views $\mathcal{X} = \{\mathbf{x}_1, \ldots, \mathbf{x}_k\}$ of a static scene, where typically $k = 1$ or is very small. example implementations then generate a new frame by running a modified version of the standard denoising diffusion reverse process for steps $\lambda_{min} = \lambda_T < \lambda_{T-1} < \ldots < \lambda_0 = \lambda_{max}$:

$$\hat{\mathbf{x}}_{k+1} = \frac{1}{\sigma(\lambda_t)^{\frac{1}{2}}}\left(\mathbf{z}_{k+1}^{(\lambda_t)} - \sigma(-\lambda_t)^{\frac{1}{2}}\varepsilon_\theta(\mathbf{z}_{k+1}^{(\lambda_t)}, \mathbf{x}_i)\right) \quad (5)$$

$$\mathbf{z}_{k+1}^{(\lambda_{t-1})} \sim q\left(\mathbf{z}_{k+1}^{(\lambda_{t-1})} | \mathbf{z}_{k+1}^{(\lambda_t)}, \hat{\mathbf{x}}_{k+1}\right) \quad (6)$$

where $i \sim Uniform(\{1, \ldots, k\})$ is re-sampled at each denoising step. In other words, each individual denoising step is conditioned on a different random view from $\mathcal{X}$ (the set that contains the input view(s) and the previously generated samples).

Once example implementations finish running this sampling chain and produce a final $\mathbf{x}_{k+1}$, example implementations can simply add it to $\mathcal{X}$ and repeat this procedure if example implementations want to sample more frames.

Given sufficient denoising steps, stochastic conditioning allows each generated frame to be guided by all previous frames. See Figures 1B and 1C for an illustration. In practice, some example implementations use 256 denoising steps, which was found to be sufficient to achieve both high sample quality and approximate 3D consistency. As usual in the literature, in some implementations, the first (noisiest sample) is just a Gaussian, i.e., $\mathbf{z}_i^{(\lambda_T)} \sim \mathcal{N}(\mathbf{0}, \mathbf{I})$, and at the last step $\lambda_0$, example implementations sample noiselessly.

Stochastic conditioning can also be interpreted as a naive approximation to true autoregressive sampling that works well in practice. True autoregressive sampling would require a score model of the form $\nabla_{\mathbf{z}_{k+1}^{(\lambda)}} \log q(\mathbf{z}_{k+1}^{(\lambda)} | \mathbf{x}_1, \ldots, \mathbf{x}_k)$, but this would strictly require multi-view training data, while example implementations are ultimately interested in enabling novel view synthesis with as few as two training views per scene.

Example X-UNet

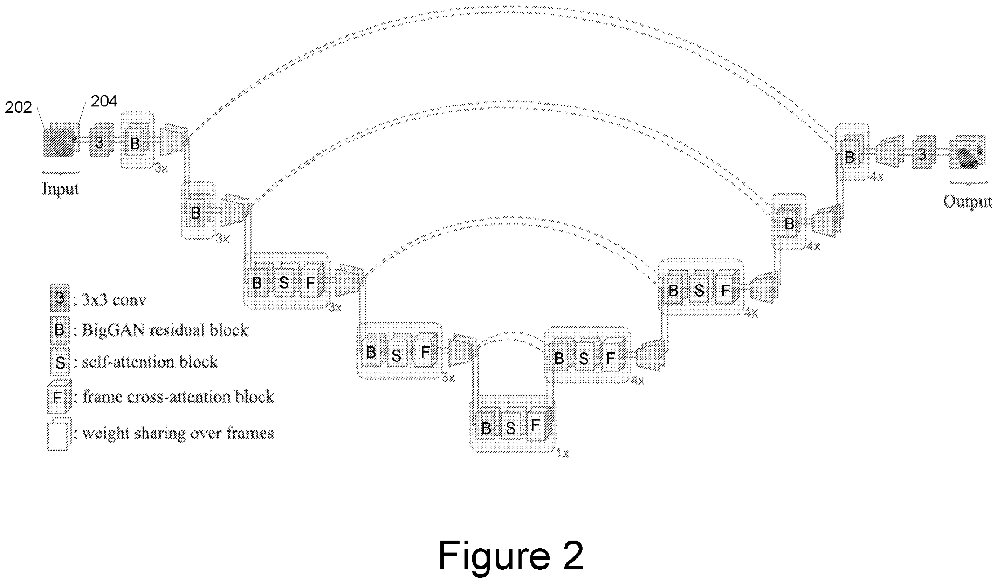

Figure 2 depicts an example X-UNet Architecture - example implementations modify the typical UNet architecture to accomodate 3D novel view synthesis. Some example implementations share the same UNet weights among the two input frames, the clean conditioning view and the denoising target view. Some example implementations add cross attention layers to mix information between the input and output view.

The3DiMmodel can benefit from a neural network architecture that takes both the conditioning frame and the noisy frame as inputs. One natural way to do this is simply to concatenate the two images along the channel dimensions, and use the standard UNet architecture. This "Concat-UNet" has found significant success in prior work of image-to-image diffusion models.

However, in some early experiments, example implementations found that the Concat-UNet yields very poor results - there were severe 3D inconsistencies and lack of alignment to the conditioning image. It is hypothesized that, given limited model capacity and training data, it is difficult to learn complex, nonlinear image transformations that only rely on self-attention. Some example implementations thus introduce an example proposed X-UNet, whose core changes are (1) sharing parameters to process each of the two views, and (2) using cross attention between the two views. Some example implementations demonstrate that the example proposed X-UNet architecture is very effective for 3D novel view synthesis.

This section now describes X-UNet in detail. Some example implementations use the UNet with residual blocks and self-attention. Some example implementations share weights over the two input frames for all the convolutional and self-attention layers, but with several key differences:

    1. Some example implementations let each frame have its own noise level (recall that the inputs to a DDPM residual block are feature maps as well as a positional encoding for the noise level). Some example implementations use a positional encoding of $\lambda_{max}$ for the clean frame. Some prior approaches conversely denoise multiple frames simultaneously, each at the same noise level.

    2. Some example implementations modulate each UNet block via FiLM, but some example implementations use the sum of pose and noise-level positional encodings, as opposed to the noise-level embedding alone. In one example, an example proposed pose encoding additionally differs in that they are of the same dimensionality as frames- they are camera rays.

    3. Instead of attending over "time" after each self-attention layer, which in an example proposed case would entail only two attention weights, some example implementations define a cross-attention layer and let each frame's feature maps call this layer to query the other frame's feature maps.

Example Illustration of Novel View Synthesis with Diffusion Models

Figures 1B and 1C depict a graphical diagram of an example process for performing novel view synthesis over a plurality of iterations according to example embodiments of the present disclosure.

The process shown in Figures 1B and 1C includes use of a machine-learned diffusion model 12 over a plurality of iterations. Specifically, Figure 1B illustrates two iterations, an initial iteration at t=1 and a second, subsequent iteration at t=2. Although two iterations are illustrated, any number of iterations can be performed.

The novel view synthesis task can begin with receipt of one or more reference images such as reference image 20. The reference image 20 can depict a 3D scene from a reference view. The 3D scene can be a real-world scene or can be a synthesized or virtual scene. The reference image 20 can be a real-world (e.g., "in the wild") image or can be a synthesized image (e.g., synthesized by the model 12 or some generative model or process). The reference image 20 (and any other supplied reference images) can be added to an image set 18.

Next, to generate a new synthetic image 16 of the 3D scene, an input can be provided to the diffusion model 12.

The input can include information about an input pose 14 from which the new synthetic image 16 should depict the 3D scene. The input pose 14 can be expressed as raw pose information (e.g., as a set of nine degree of freedom values). In another example, the input pose 14 can be expressed as a relative change in pose relative to one or more reference poses (e.g., the pose of reference image 20). In another example, the input pose 14 can be encoded at the same dimensionality as the frames and represent relative camera rays.

The input to the diffusion model 12 can also include an initial image 15. In some examples, the initial image 15 can simply include random noise.

The diffusion model 12 can process the input to generate the synthetic image 16. The synthetic image 16 can depict the 3D scene from the input pose 14. In particular, the machine-learned diffusion model 12 can include a plurality of denoising steps. Figure 1B depicts three denoising steps 22a, 22b, and 22n. However, any number of steps can be used. For example, the model 12 can include hundreds of denoising steps.

Each denoising step can be configured to receive a current intermediate image and a conditioning image. Except for the initial denoising step 22a that receives the initial image 15, the current intermediate image for each denoising step 22b-22n can be the image output by the previous sequential denoising step. Each denoising step 22a-22n can denoise the current intermediate image, conditioned on the conditioning image, to produce a next intermediate image for the next sequential denoising step, except that the final denoising step 22n can output the final synthetic image 16.

For example, as illustrated in Figure 1B, denoising step 22b can be configured to receive an intermediate image 26 that was output by the previous denoising step 22a and a conditioning image 24b. Because in the illustrated example there is only a single image 20 in the image set 18 at t=1, the reference image 20 is used as the conditioning image for all denoising steps 22a-n. The final denoising step 22n can output the synthetic image 16.

According to an aspect of the present disclosure, the synthetic image 16 can be added to the image set 18 for sampling as a conditioning image in a subsequent iteration. Specifically, as illustrated in Figure 1C, at t=2, the image set can now contain the reference image 20 and the synthetic image 16 generated at t=1.

As shown in Figure 1C, the diffusion model 12 can again be used to generate another synthetic image 66 of the 3D scene (e.g., based on an input including another input pose 54 and another initial image 55).

However, according to an aspect of the present disclosure, for each of the plurality of denoising steps 22a-n, an image can be sampled (e.g., randomly) from the image set 18 to serve as the conditioning image for that denoising step. This allows for efficient mixing of previously-generated or reference views of the scene, which results in improved 3D consistency between the synthesized image(s) and the image(s) in the image set 18.

Specifically, as illustrated in Figure 1C: for denoising step 22a, the synthetic image 16 can be sampled as the conditioning image 64a; for denoising step 22b, the reference image 20 can be sampled as the conditioning image 64b; and for denoising step 22n, the synthetic image 16 can be sampled as the conditioning image 64n.

Various sampling techniques can be used to sample the conditioning image at each denoising step. As one example, purely random sampling can be performed. As another example, weighted random sampling (e.g., randomly sampled with weighted probabilities) can be performed. The weight for each image in the set can be based on a distance between the input pose 54 and the respective pose of the respective image in the image set 18. For example, images in the set 18 that have poses that are more similar (closer) to the input pose 54 can be weighted greater, so that they have more likelihood of serving as the conditioning image. This may improve local 3D consistency. As another example, reference images (e.g., image 20) may be weighted greater than synthetic images (e.g., image 16), so as to increase the likelihood that ground truth images are used to condition the new synthetic images (but while still achieving 3D consistency via mixing). In another example, a defined mixing schedule can be used to sample the conditioning images.

At the end of iteration t=2, the synthetic image 66 can be added to the image set 18. Additional iteration(s) can then be performed. In such fashion, any number of synthetic images representing novel views of the scene can be generated, while demonstrating 3D consistency via mixing of conditioning images.

Figure 2 depicts a graphical diagram of an example diffusion model architecture for performing novel view synthesis according to example embodiments of the present disclosure. For example, the architecture shown in Figure 2 can be used to implement one or more of the denoising steps. That is, the architecture shown in Figure 2 may represent one individual denoising step; and can be repeated for any number of denoising steps.

Specifically, the architecture shown in Figure 2, is similar to but includes modifications of a typical UNet architecture. The architecture can use BigGAN-style residual blocks followed by self-attention at feasible resolutions.

In particular, according to one aspect, the architecture can share most weights among the two input frames (e.g., a current intermediate image 202 and a conditioning image 204). Thus, some or all of the blocks can use shared weights for processing both the current intermediate image 202 for such denoising step and the conditioning image 204 for such denoising step. For example, weights can be shared over the two input frames at all the convolutional and self-attention layers.

The architecture can also include frame cross-attention blocks. According to another aspect, information mixing between the current intermediate image 202 for such denoising step and the conditioning image 204 (e.g., between their forward processing streams) for such denoising step may be limited to the one or more frame cross-attention blocks.

Example Devices and Systems

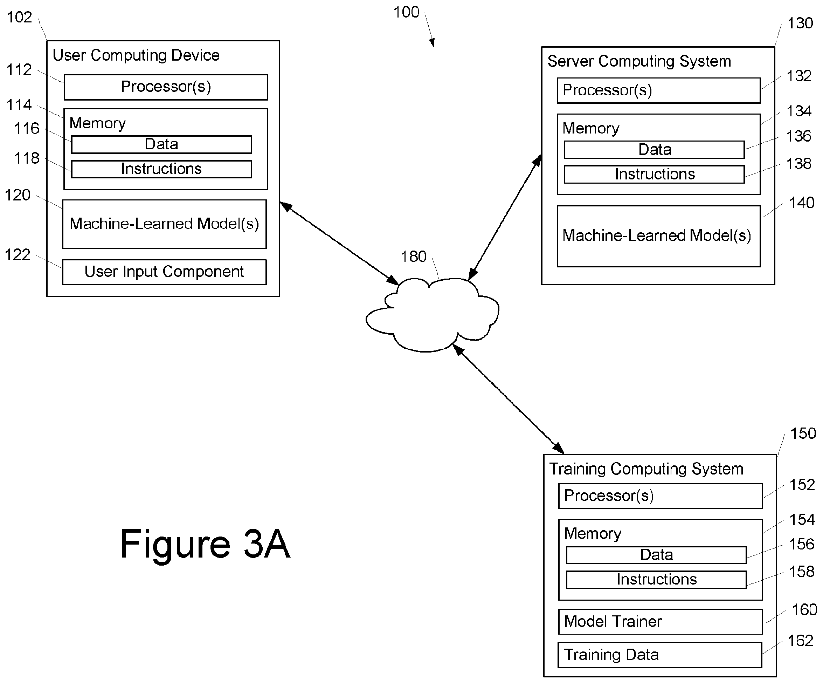

Figure 3A depicts a block diagram of an example computing system 100 that performs novel view synthesis according to example embodiments of the present disclosure. The system 100 includes a user computing device 102, a server computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 includes one or more processors 112 and a memory 114. The one or more processors 112 can be any suitable processing device (e.g., a processor core, a microprocessor, an ASIC, an FPGA, a controller, a microcontroller, etc.) and can be one processor or a plurality of processors that are operatively connected. The memory 114 can include one or more non-transitory computer-readable storage media, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

In some implementations, the user computing device 102 can store or include one or more machine-learned models 120. For example, the machine-learned models 120 can be or can otherwise include various machine-learned models such as the diffusion models described. Example machine-learned models 120 are discussed with reference to Figures 1-2.

In some implementations, the one or more machine-learned models 120 can be received from the server computing system 130 over network 180, stored in the user computing device memory 114, and then used or otherwise implemented by the one or more processors 112. In some implementations, the user computing device 102 can implement multiple parallel instances of a single machine-learned model 120 (e.g., to perform parallel novel view synthesis across multiple instances of scenes, reference images, etc.).

Additionally or alternatively, one or more machine-learned models 140 can be included in or otherwise stored and implemented by the server computing system 130 that communicates with the user computing device 102 according to a client-server relationship. For example, the machine-learned models 140 can be implemented by the server computing system 140 as a portion of a web service (e.g., a novel view synthesis service). Thus, one or more models 120 can be stored and implemented at the user computing device 102 and/or one or more models 140 can be stored and implemented at the server computing system 130.

The user computing device 102 can also include one or more user input components 122 that receives user input. For example, the user input component 122 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 130 includes one or more processors 132 and a memory 134. The one or more processors 132 can be any suitable processing device (e.g., a processor core, a microprocessor, an ASIC, an FPGA, a controller, a microcontroller, etc.) and can be one processor or a plurality of processors that are operatively connected. The memory 134 can include one or more non-transitory computer-readable storage media, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more machine-learned models 140. For example, the models 140 can be or can otherwise include various machine-learned models. Example machine-learned models include diffusion models as described herein. Example models 140 are discussed with reference to Figures 1-2.

The user computing device 102 and/or the server computing system 130 can train the models 120 and/or 140 via interaction with the training computing system 150 that is communicatively coupled over the network 180. The training computing system 150 can be separate from the server computing system 130 or can be a portion of the server computing system 130.

The training computing system 150 includes one or more processors 152 and a memory 154. The one or more processors 152 can be any suitable processing device (e.g., a processor core, a microprocessor, an ASIC, an FPGA, a controller, a microcontroller, etc.) and can be one processor or a plurality of processors that are operatively connected. The memory 154 can include one or more non-transitory computer-readable storage media, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 120 and/or 140 stored at the user computing device 102 and/or the server computing system 130 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the machine-learned models 120 and/or 140 based on a set of training data 162. In some implementations, if the user has provided consent, the training examples can be provided by the user computing device 102. Thus, in such implementations, the model 120 provided to the user computing device 102 can be trained by the training computing system 150 on user-specific data received from the user computing device 102. In some instances, this process can be referred to as personalizing the model.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM, hard disk, or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

Figure 3A illustrates one example computing system that can be used to implement the present disclosure. Other computing systems can be used as well. For example, in some implementations, the user computing device 102 can include the model trainer 160 and the training dataset 162. In such implementations, the models 120 can be both trained and used locally at the user computing device 102. In some of such implementations, the user computing device 102 can implement the model trainer 160 to personalize the models 120 based on user-specific data.

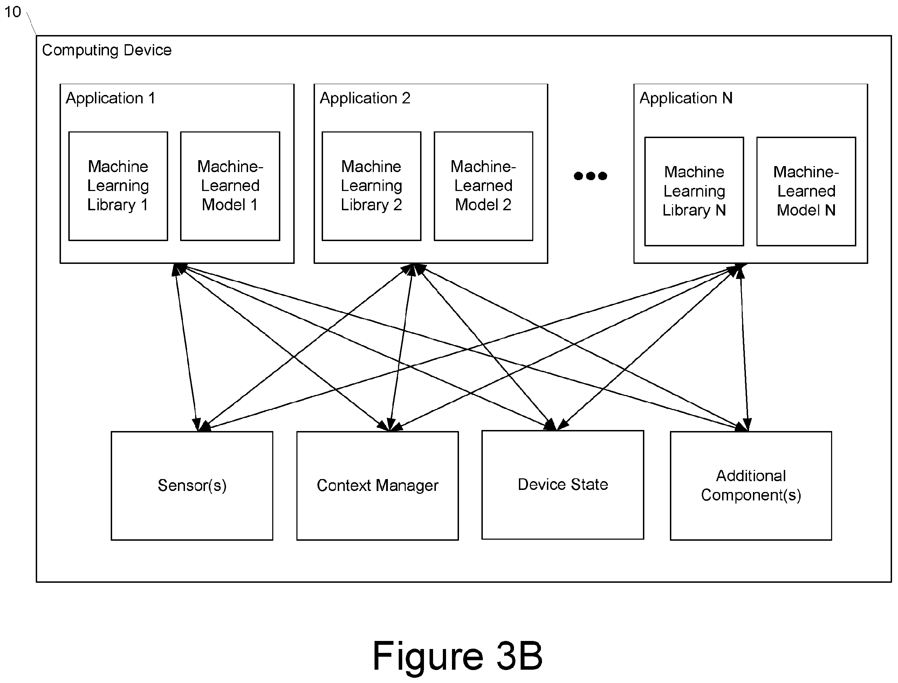

Figure 3B depicts a block diagram of an example computing device 10 that performs according to example embodiments of the present disclosure. The computing device 10 can be a user computing device or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 3B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

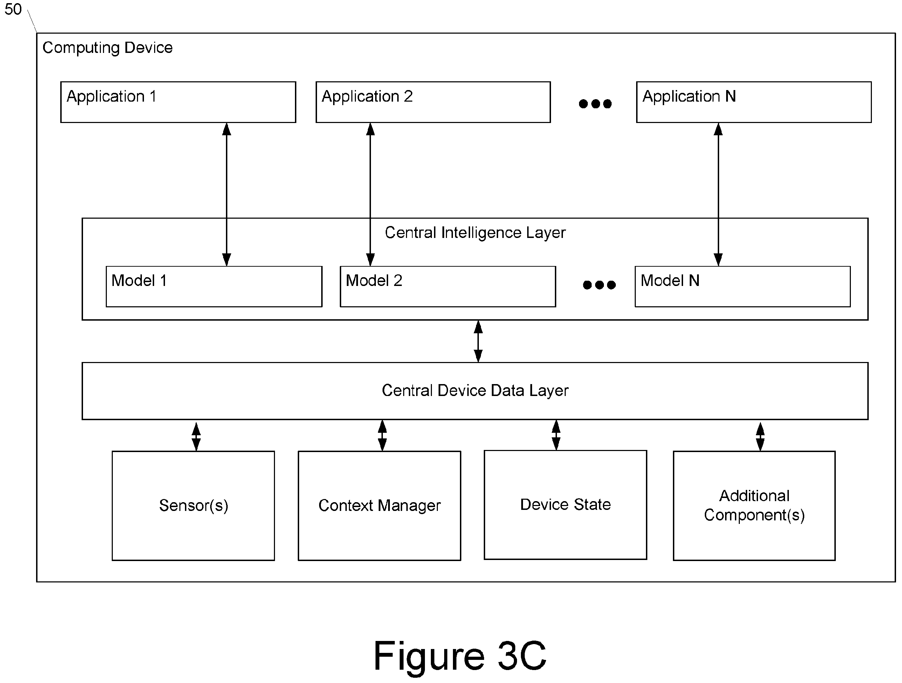

Figure 3C depicts a block diagram of an example computing device 50 that performs according to example embodiments of the present disclosure. The computing device 50 can be a user computing device or a server computing device.

The computing device 50 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 3C, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 3C, the central device data layer can communicate with a number of other components of the computing device, such as, for example, one or more sensors, a context manager, a device state component, and/or additional components. In some implementations, the central device data layer can communicate with each device component using an API (e.g., a private API).

Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents, as far as covered by the appended claims.

**Claims**

1. A computer-implemented method to perform novel view synthesis of a three-dimensional scene with a machine-learned diffusion model, the method comprising:
   for each of one or more iterations:

   obtaining, by a computing system comprising one or more computing devices, an input comprising data descriptive of an input pose (14);
   processing, by the computing system, the input with the machine-learned diffusion model (12) to generate a synthetic image (16) of the three-dimensional scene from the input pose, the synthetic image representing a novel view of the three dimensional scene;
   wherein the machine-learned diffusion model comprises a plurality of denoising steps configured to respectively receive a plurality of conditioning images; and
   wherein processing, by the computing system, the input with the machine-learned diffusion model to generate the synthetic image comprises, for each of at least two of the plurality of denoising steps:

   accessing, by the computing system, an image set that comprises a plurality of images that depict the three-dimensional scene from a plurality of poses; and
   sampling, by the computing system, a sampled image (20) from the image set to serve as the conditioning image for such denoising step.

2. The computer-implemented method of any preceding claim, further comprising:
   adding, by the computing system, the synthetic image to the image set for sampling as a conditioning image in a subsequent iteration.

3. The computer-implemented method of any preceding claim, wherein, for at least one of the one or more iterations, the image set contains at least one previously-generated synthetic image that was previously generated in a preceding iteration.

4. The computer-implemented method of any preceding claim, wherein the image set contains only a single ground truth image of the three-dimensional scene.

5. The computer-implemented method of any preceding claim, wherein sampling, by the computing system, the sampled image from the image set comprises randomly sampling, by the computing system, a sampled image from the image set.

6. The computer-implemented method of any preceding claim, wherein at least one of the plurality of denoising steps of the machine-learned diffusion model comprises at least one block that uses shared weights for processing both a current intermediate image for such denoising step and the conditioning image for such denoising step.

7. The computer-implemented method of any preceding claim, wherein at least one of the plurality of denoising steps of the machine-learned diffusion model comprises one or more frame cross-attention blocks, and wherein information mixing between a current intermediate image for such denoising step and the conditioning image for such denoising step is limited to the one or more frame cross-attention blocks.

8. The computer-implemented method of any preceding claim, further comprising:

evaluating, by the computing system, a loss function that compares the synthetic image of the three-dimensional scene from the input pose with a ground truth image of the three-dimensional scene from the input pose; and modifying one or more values or one or more parameters of the machine-learned diffusion model based on the loss function.

9. The computer-implemented method of any preceding claim, further comprising:

evaluating, by the computing system, a three-dimensional consistency of the machine-learned diffusion model; wherein evaluating the three-dimensional consistency of the machine-learned diffusion model comprises:

training a neural radiance field model on the image set and the synthetic image; and evaluating a performance of the trained neural radiance field model on one or more performance metrics; wherein the performance of the trained neural radiance field model is indicative of the three-dimensional consistency of the machine-learned diffusion model.

10. The computer-implemented method of any preceding claim, wherein the method is performed for a plurality of iterations.

11. A computing system (102, 130, 150) configured to perform the method of any of claims 1-10.

12. One or more non-transitory computer-readable media that collectively store instructions that, when executed by a computing system, cause the computing system to perform the method of any of claims 1-10.

**Patentansprüche**

1. Computerimplementiertes Verfahren, um eine neuartige Ansichtssynthese einer dreidimensionalen Szene mit einem maschinell gelernten Diffusionsmodell durchzuführen, wobei das Verfahren Folgendes umfasst:
für jede von einer oder mehreren Iterationen:

Erhalten einer Eingabe, die Daten umfasst, die eine Eingabepose (14) beschreiben, durch ein Rechensystem, das eine oder mehrere Rechenvorrichtungen umfasst;
Verarbeiten der Eingabe durch das Rechensystem mit dem maschinell gelernten Diffusionsmodell (12), um ein synthetisches Bild (16) der dreidimensionalen Szene aus der Eingabepose zu erzeugen, wobei das synthetische Bild eine neuartige Ansicht der dreidimensionalen Szene darstellt;
wobei das maschinell gelernte Diffusionsmodell eine Vielzahl von Entrauschungsschritten umfasst, die dazu konfiguriert sind, jeweils eine Vielzahl von Konditionierungsbildern zu empfangen; und
wobei das Verarbeiten der Eingabe durch das Rechensystem mit dem maschinell gelernten Diffusionsmodell, um das synthetische Bild zu erzeugen, für jeden von mindestens zwei der Vielzahl von Entrauschungsschritten Folgendes umfasst:

Zugreifen, durch das Rechensystem, auf einen Bildsatz, der eine Vielzahl von Bildern umfasst, die die dreidimensionale Szene aus einer Vielzahl von Posen abbilden; und

Abtasten, durch das Rechensystem, eines abgetasteten Bildes (20) aus dem Bildsatz, das als Konditionierungsbild für einen solchen Entrauschungsschritt dienen soll.

2. Computerimplementiertes Verfahren nach einem der vorhergehenden Ansprüche, ferner umfassend: Hinzufügen des synthetischen Bildes durch das Rechensystem zu dem Bildsatz zum Abtasten als Konditionierungsbild in einer nachfolgenden Iteration.

3. Computerimplementiertes Verfahren nach einem der vorhergehenden Ansprüche, wobei für mindestens eine der einen oder mehreren Iterationen der Bildsatz mindestens ein zuvor erzeugtes synthetisches Bild enthält, das zuvor in einer vorhergehenden Iteration erzeugt wurde.

4. Computerimplementiertes Verfahren nach einem der vorhergehenden Ansprüche, wobei der Bildsatz nur ein einziges Ground-Truth-Bild der dreidimensionalen Szene enthält.

5. Computerimplementiertes Verfahren nach einem der vorhergehenden Ansprüche, wobei das Abtasten des abgetasteten Bildes aus dem Bildsatz durch das Rechensystem das zufällige Abtasten eines abgetasteten Bildes aus dem Bildsatz durch das Rechensystem umfasst.

6. Computerimplementiertes Verfahren nach einem der vorhergehenden Ansprüche, wobei mindestens einer der Vielzahl von Entrauschungsschritten des maschinell gelernten Diffusionsmodells mindestens einen Block umfasst, der gemeinsame Gewichtungen zum Verarbeiten sowohl eines aktuellen Zwischenbilds für einen solchen Entrauschungsschritt als auch des Konditionierungsbilds für einen solchen Entrauschungsschritt verwendet.

7. Computerimplementiertes Verfahren nach einem der vorhergehenden Ansprüche, wobei mindestens einer der Vielzahl von Entrauschungsschritten des maschinell gelernten Diffusionsmodells einen oder mehrere Frame-Cross-Attention-Blöcke umfasst, und wobei die Informationsmischung zwischen einem aktuellen Zwischenbild für einen solchen Entrauschungsschritt und dem Konditionierungsbild für einen solchen Entrauschungsschritt auf den einen oder die mehreren Frame-Cross-Attention-Blöcke beschränkt ist.

8. Computerimplementiertes Verfahren nach einem der vorhergehenden Ansprüche, ferner umfassend:

Auswerten einer Verlustfunktion durch das Rechensystem, die das synthetische Bild der dreidimensionalen Szene aus der Eingabepose mit einem Ground-Truth-Bild der dreidimensionalen Szene aus der Eingabepose vergleicht; und
Modifizieren eines oder mehrerer Werte oder eines oder mehrerer Parameter des maschinell gelernten Diffusionsmodells basierend auf der Verlustfunktion.

9. Computerimplementiertes Verfahren nach einem der vorhergehenden Ansprüche, ferner umfassend:

Bewerten einer dreidimensionalen Konsistenz des maschinell gelernten Diffusionsmodells durch das Rechensystem;
wobei das Bewerten der dreidimensionalen Konsistenz des maschinell gelernten Diffusionsmodells Folgendes umfasst:

Trainieren eines neuronalen Strahlungsfeldmodells anhand des Bildsatzes und des synthetischen Bildes; und
Bewerten einer Leistung des trainierten neuronalen Strahlungsfeldmodells anhand einer oder mehrerer Leistungsmetriken;
wobei die Leistung des trainierten neuronalen Strahlungsfeldmodells die dreidimensionale Konsistenz des maschinell gelernten Diffusionsmodells anzeigt.

10. Computerimplementiertes Verfahren nach einem der vorhergehenden Ansprüche, wobei das Verfahren für eine Vielzahl von Iterationen durchgeführt wird.

11. Rechensystem (102, 130, 150), das dazu konfiguriert ist, das Verfahren nach einem der Ansprüche 1-10 durchzuführen.

12. Ein oder mehrere nicht-transitorische, computerlesbare Medien, die gemeinsam Anweisungen speichern, die, wenn sie von einem Rechensystem ausgeführt werden, das Rechensystem veranlassen, das Verfahren nach einem der Ansprüche 1-10 durchzuführen.

**Revendications**

1. Procédé mis en œuvre par ordinateur permettant de réaliser une nouvelle synthèse de vues d'une scène tridimensionnelle avec un modèle de diffusion appris par machine, le procédé comprenant :
   pour chacune d'une ou plusieurs itérations :

   l'obtention, par un système informatique comprenant un ou plusieurs dispositifs informatiques, d'une entrée comprenant des données descriptives d'une pose d'entrée (14) ;
   le traitement, par le système informatique, de l'entrée avec le modèle de diffusion appris par machine (12) pour générer une image synthétique (16) de la scène tridimensionnelle à partir de la pose d'entrée, l'image synthétique représentant une nouvelle vue de la scène tridimensionnelle ;
   dans lequel le modèle de diffusion appris par machine comprend une pluralité d'étapes de débruitage configurées pour recevoir respectivement une pluralité d'images de conditionnement ; et
   dans lequel le traitement, par le système informatique, de l'entrée avec le modèle de diffusion appris par machine pour générer l'image synthétique comprend, pour chacune d'au moins deux de la pluralité d'étapes de débruitage :

   l'accès, par le système informatique, à un ensemble d'images qui comprend une pluralité d'images qui représentent la scène tridimensionnelle à partir d'une pluralité de poses ; et
   l'échantillonnage, par le système informatique, d'une image échantillonnée (20) à partir de l'ensemble d'images pour servir d'image de conditionnement pour cette étape de débruitage.

2. Procédé mis en œuvre par ordinateur selon une quelconque revendication précédente, comprenant également :
   l'ajout, par le système informatique, de l'image synthétique à l'ensemble d'images à échantillonner comme image de conditionnement dans une itération ultérieure.

3. Procédé mis en œuvre par ordinateur selon une quelconque revendication précédente, dans lequel, pour au moins l'une des une ou plusieurs itérations, l'ensemble d'images contient au moins une image synthétique générée précédemment qui a été générée précédemment lors d'une itération précédente.

4. Procédé mis en œuvre par ordinateur selon une quelconque revendication précédente, dans lequel l'ensemble d'images ne contient qu'une seule image de réalité de terrain de la scène tridimensionnelle.

5. Procédé mis en œuvre par ordinateur selon une quelconque revendication précédente, dans lequel l'échantillonnage, par le système informatique, de l'image échantillonnée à partir de l'ensemble d'images comprend l'échantillonnage aléatoire, par le système informatique, d'une image échantillonnée à partir de l'ensemble d'images.

6. Procédé mis en œuvre par ordinateur selon une quelconque revendication précédente, dans lequel au moins l'une de la pluralité d'étapes de débruitage du modèle de diffusion appris par machine comprend au moins un bloc qui utilise des poids partagés pour traiter à la fois une image intermédiaire actuelle pour cette étape de débruitage et l'image de conditionnement pour cette étape de débruitage.

7. Procédé mis en œuvre par ordinateur selon une quelconque revendication précédente, dans lequel au moins l'une de la pluralité d'étapes de débruitage du modèle de diffusion appris par machine comprend un ou plusieurs blocs d'attention croisée de trame, et dans lequel le mélange d'informations entre une image intermédiaire actuelle pour cette étape de débruitage et l'image de conditionnement pour cette étape de débruitage est limité aux un ou plusieurs blocs d'attention croisée de trame.

8. Procédé mis en œuvre par ordinateur selon une quelconque revendication précédente, comprenant également :

   l'évaluation, par le système informatique, d'une fonction de perte qui compare l'image synthétique de la scène tridimensionnelle à partir de la pose d'entrée avec une image de réalité de terrain de la scène tridimensionnelle à partir de la pose d'entrée ; et
   la modification d'une ou plusieurs valeurs d'un ou plusieurs paramètres du modèle de diffusion appris par machine sur la base de la fonction de perte.

9. Procédé mis en œuvre par ordinateur selon une quelconque revendication précédente, comprenant également :

l'évaluation, par le système informatique, d'une cohérence tridimensionnelle du modèle de diffusion appris par machine ;
dans lequel l'évaluation de la cohérence tridimensionnelle du modèle de diffusion appris par machine comprend :

l'entraînement d'un modèle de champ de radiance neuronal sur l'ensemble d'images et l'image synthétique ; et
l'évaluation des performances du modèle de champ de radiance neuronal entraîné sur une ou plusieurs métriques de performance ;
dans lequel les performances du modèle de champ de radiance neuronal entraîné sont indicatives de la cohérence tridimensionnelle du modèle de diffusion appris par machine.

10. Procédé mis en œuvre par ordinateur selon une quelconque revendication précédente, dans lequel le procédé est réalisé pour une pluralité d'itérations.

11. Système informatique (102, 130, 150) configuré pour réaliser le procédé selon l'une quelconque des revendications 1 à 10.

12. Un ou plusieurs supports non transitoires lisibles par ordinateur qui stockent collectivement des instructions qui, lorsqu'elles sont exécutées par un système informatique, amènent le système informatique à réaliser le procédé selon l'une quelconque des revendications 1 à 10.

Figure 1A

Figure 1B

Figure 1C

EP 4 548 254 B1

Figure 2

Figure 3A

EP 4 548 254 B1

Figure 3B

50

## Computing Device

| Application 1 | Application 2 | ••• | Application N |

### Central Intelligence Layer

| Model 1 | Model 2 | ••• | Model N |

### Central Device Data Layer

| Sensor(s) | Context Manager | Device State | Additional Component(s) |

# Figure 3C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021158337 A2

**Non-patent literature cited in the description**

- **R. ROMBACH et al.** High-Resolution Image Synthesis with Latent Diffusion Models. *EEE/CVF Conference on Computer Vision and Pattern Recognition (CVPR), New Orleans, LA, USA*, 2022, 10674-10685

- **J. YAND et al.** Weakly-supervised Disentagling with Recurrent Transformations for 3D View Synthesis. *arXiv:1601.00706*, 2016
- **A. YU et al.** pixelNeRF: Neural Radiance Field from One or Few Images. *arXiv:2012.02190*, 2020